**Europäisches Patentamt**

**European Patent Office**

**Office européen des brevets**

(19)

(11) Veröffentlichungsnummer: **0 024 613**

**A1**

(12)

# EUROPÄISCHE PATENTANMELDUNG

(21) Anmeldenummer: **80104722.6**

(22) Anmeldetag: **11.08.80**

(51) Int. Cl.³: **D 06 F 75/26**
**G 05 D 23/24**

(30) Priorität: **27.08.79 DE 2934519**
**27.08.79 DE 2934520**
**27.08.79 DE 7924294 U**

(43) Veröffentlichungstag der Anmeldung:
**11.03.81 Patentblatt 81/10**

(84) Benannte Vertragsstaaten:
**BE CH FR GB IT LI NL SE**

(71) Anmelder: **Rowenta-Werke GmbH**
**Waldstrasse 232**
**D-6050 Offenbach/Main(DE)**

(72) Erfinder: **Conrad, Rainer, Dr.**
**Brauhausstrasse 2**
**D-6450 Hanau 7(DE)**

(72) Erfinder: **Jöckel, Wolfgang, Ing.Grad.**
**W.Schrammstrasse 24**
**D-6050 Offenbach/Main(DE)**

(72) Erfinder: **Seifert, Hubert**
**Herderstrasse 12**
**D-6056 Heusenstamm(DE)**

(74) Vertreter: **Meier, Robert, Dipl.-Ing.**
**Patentanwalt Dipl.-Ing. Robert Meier Auf dem Mühlberg**
**16**
**D-6000 Frankfurt/Main(DE)**

(54) Elektrisch beheiztes Bügeleisen.

(57) Bei diesem Bügeleisen mit einem Griff (47) und einer Griffstütze (42) ist in einer Sohle (48) eine Heizwicklung (1) mit einem Triac (2) als Leistungsschalter vorgesehen, der von einem elektronischen Temperaturregler (9) geschaltet wird.

Zwecks Verbesserung der Bedienungs- bzw. Verwendungsfähigkeit des Bügeleisens ist der Triac (2) - getrennt von den Schaltungselementen des Temperaturreglers (9) - auf der der Bügeleisenspitze (480) abgewandten Seite in einem dichten Hohlraum (41) angeordnet, der Bestandteil einer Kabelaufwickelvorrichtung (46) mit Abstellfläche (43) ist, und zur Schaltung seiner Leistungsdurchgänge an einen IC (10) angeschlossen dessen Steuereingänge (105,24) mit denen einer Anzeigevorrichtung (31) mit optischen und/oder akustischen Anzeigeelementen (27,28,29) gemeinsam an der Mittelanzapfung (17) eines Reglerspannungsteilers (16) angeschlossen

./...

Fig.1

Fig.2

- 1 -

## Elektrisch beheiztes Bügeleisen

Die Erfindung bezieht sich auf ein elektrisch beheiztes Bügeleisen bestehend aus einer Sohle mit Heizwicklung, einem Griff, einer Griffstütze und einem elektronischen Temperaturregler, in dem als Leistungsschalter für die Heizwicklung ein Triac mit Kühlblech vorgesehen ist.

Bei einem bekanntgewordenen elektrisch beheizten und temperaturgeregelten Bügeleisen, weist der als Hohlkörper ausgebildete Griff im Bereich des hinteren Sohlenrandes eine schmale, sich nach oben, vorzugsweise bis zur vollen Griffhöhe erstreckende, wärmegeschirmte, vorzugsweise belüftete Kammer auf, in welcher in ihrer Erstreckung eine, eine elektronische Temperaturregel-Einrichtung darstellende Plattenbaugruppe angeordnet ist, deren Einstellorgan mit einem Einstellglied durch die Griffwandung hindurch geführt und mit einem Bedienungselement mit Einstellanzeige versehen ist ( DE - GM 19 72 915 ).

Nachteilig ist, daß diese zusätzliche Kammer bei der Herstellung des Griffes besondere Werkzeugkosten verursacht.

Nachteilig ist weiterhin, daß der vom Temperaturregler gesteuerte Leistungsschalter beträchtliche Wärmemengen in unmittelbarer Nähe der Schaltungselemente abgibt. Wenn auch der Thyristor selbst auf einer wärmeabführenden Metallplatte sitzt, läßt sich nicht vermeiden, daß seine Strahlungswärme die wärmeempfindlichen anderen Schaltungselemente der Plattengruppe störend beeinflußt.

Hinzukommt, daß bisher die elektronischen Temperaturregler für Bügeleisen nicht mit einer Anzeigevorrichtung ausgerüstet werden konnten die bei einer Neueinstellung der Bügeleisentemperatur durch den Temperaturwähler anzeigen, wann mit dem Bügeln gefahrlos begonnen werden kann. Zwar sind Bimetall-Temperaturregler mit Anzeigevorrichtung in Bügeleisen im Gebrauch, jedoch haben Bimetallregler den Nachteil, daß große Temperaturstreuungen und damit Temperaturunterschiede von plus/minus 20° C zwischen der vorgewählten Soll-Temperatur und der Sohlentemperatur vorkommen können.

Demgegenüber liegt der Erfindung die Aufgabe zugrunde, ein elektrisches Bügeleisen mit elektronischem Temperaturregler zu schaffen, das nicht nur herstellungsmäßig und bedienungs- sowie servicetechnisch einfacher ist als bisherige Bügeleisen, sondern das darüberhinaus eine genauere, raschere und von schädlichen Temperatureinflüssen unabhängigere Ist-Soll-Wert-Anpassung und deren leicht verständliche Anzeige ermöglicht.

Es wurde gefunden, daß sich dieses in einfacher Weise dadurch erreichen läßt, daß zur Aufnahme des räumlich von den Schaltungselementen des Temperaturreglers getrennten Triac's auf der der Bügeleisenspitze abgewandten Seite ein dichter Hohlraum angeordnet ist, dessen leicht lösbare rückwärtige Begrenzungswand zugleich die Abstellfläche bildet, mit deren dem Hohlraum zugewandten Seite eine Metallplatte in Verbindung steht, auf der das wesentlich kleinere Kühlblech des Triac's befestigt ist.

Durch die räumliche Trennung des Triac's von den anderen wärmeempfindlichen Schaltungselementen des Temperaturreglers, sind diese dem schädlichen Einfluß des Triac's entzogen.

Dadurch, daß das Kühlblech des Triac's auf einer relativ großen Metallplatte befestigt ist, kann sich die vom Triac erzeugte Wärme auf diese große Fläche verteilen, wodurch eine Temperaturabsenkung verursacht wird. Der Hohlraum ist nicht belüftet, sondern wasserdicht verschlossen, so daß der Triac, vor allem bei Dampfbügeleisen, sicher vor dem Wasser ist.

Von besonderem Vorteil ist, daß die sowieso vorhandene Abstellfläche eine weitere Funktion übernehmen kann. Die aus Kunststoff hergestellte Abstellfläche sorgt zudem dafür, daß eine Wärmeisolationsschicht zwischen der Metallplatte und derjenigen Fläche angeordnet ist, auf die das Bügeleisen abgestellt wird. Dieses hat zur Folge, daß selbst bei heißem Bügeleisen keine Verbrennungsgefahr besteht.

In Weiterbildung der Erfindung weist die dem Hohlraum abgewandte Seite der Abstellfläche eine wesentlich größere Oberfläche als die dem Hohlraum zugewandte Seite auf. Diese Vergrößerung der Oberfläche kann durch eine Strukturierung bzw. Schraffierung hervorgerufen werden. Besondere Vorteile ergeben sich dann, wenn zur Vergrößerung der Oberfläche Kühlrippen in der dem Hohlraum abgewandten Seite der Abstellfläche eingebracht sind. Diese Kühlrippen haben zu der Vergrößerung der wärmeabgebenden Oberfläche auch noch eine gewisse Schornsteinwirkung zur Folge.

Erfindungsgemäß ist der Hohlraum im Inneren einer zwischen Griffstütze und Abstellfläche vorgesehenen an sich bekannten Kabelaufwickelvorrichtung angeordnet. Hierdurch wird in raumsparender Weise zur Unterbringung des Triac's ein besonders vorteilhafter Bereich verwendet.

In weiterer Ausbildung der Erfindung sind die elektronischen Schaltungselemente des Temperaturreglers und der Anzeigevorrichtung - außer dem Triac - feuchtigkeitsdicht im oberen Bereich des Griffes, und der Temperaturfühler für den Regler an der Sohle des Bügeleisens vorgesehen.

Durch diese Aufteilung ist jedes Schaltungselement für sich leicht zugänglich. Wenn der Triac beschädigt ist, läßt sich dieser, ohne die anderen Schaltungslememte zu beeinträchtigen, leicht aus der Aufwickelvorrichtung ausbauen und durch einen neuen Triac ersetzen. Die im oberen Bereich des Griffes angeordneten Schaltungselemente werden kaum durch die Strahlungswärme des Bügeleisens, erst recht nicht durch die Wärme, die der Triac abgibt, beeinflußt. Der Temperaturfühler sitzt leicht zugänglich an der für ihn optimalen Stelle des Bügeleisens.

In weiterer Ausbildung der Erfindung ist eine die elektronischen Schaltungselemente tragende Platine im Inneren des durch einen Deckel verschließbaren oberen Bereiches des Griffes angeordnet. Die Randbereiche des Deckels und des oberen Bereiches weisen einander entsprechende Hinterschneidungen für eine labyrinthartige Abdichtung auf. Hierdurch ist die Platine mit den elektronischen Schaltungselementen nicht nur leicht zugänglich, sondern auch sicher, insbesondere bei Dampfbügeleisen, vor Wasser und Wasserdampf geschützt.

Von Vorteil ist weiterhin, daß die elektrischen Schaltungselemente ein im vorderen Bereich der Platine angeordnetes Potentiometer bzw. einen Stufenschalter zur Temperaturvorgabe sowie drei Leuchtdioden einschließen, die auf der Platine vor dem Potentiometer bzw. Stufenschalter angeordnet sind. Durch die Anordnung des Potentiometers bzw. des Stufenschalters im vorderen Bereich der Platine kann das Verstellorgan hierfür so in den Einflußbereich des Daumens bzw. eines Fingers der bügelnden Hand gebracht werden, daß eine einfache Bedienung bzw. Voreinstellung der Bügeltemperatur möglich ist. Man erreicht dadurch zudem, daß der Bedienungsknopf für die Temperaturvorgabe aus seiner bisherigen Position unterhalb des Griffes entfernt werden kann. Die Leuchtdioden sind in räumlicher Nähe zum Potentiometer für die Temperaturvorgabe angeordnet. Mühelos kann die Betriebsbereitschaft des Bügeleisens vom Benutzer erkannt werden.

In Weiterbildung der Erfindung ist im hinteren Bereich der Platine ein Vielfachstecker mit einer Zwangsführung vorgesehen, die mit wenigstens einer im Inneren des Griffes angeformten Nase in Wirkverbindung steht.

Der Vielfachstecker gestattet ein schnelles Auswechseln der Platine mit den Schaltungselementen. Durch die Nase und die Zwangsführung können auch nicht ausgebildete Fachkräfte den Zusammenbau bzw. den Instandsetzungsdienst am Bügeleisen vornehmen.

Dadurch, daß das Potentiometer zur Temperaturvorgabe als Rastpotentiometer ausgebildet ist, wird einerseits eine sehr feinstufige Einstellung und andererseits eine Sicherung gegen unbeabsichtigtes Verstellen des Potentiometers erreicht.

Für die auf der Platine angeordneten Leuchtdioden sind im Griff Sichtfenster vorgesehen.

Die Achse des Potentiometers bzw. des Stufenschalters kann in Gebrauchslage des Bügeleisen entweder vertikal oder auch horizontal angeordnet sein. Hierdurch ist die Möglichkeit geschaffen, die gute Bedienungsmöglichkeit des Potentiometers bzw. des Stufenschalters dem jeweils erforderlichen Design anzupassen.

Schließlich ist der Triac über Steckverbindung leicht lösbar mit dem Temperaturregler verbunden. Hierdurch ist eine außerordentlich leichte Auswechselbarkeit des Leistungsschalters gewährleistet. Bei beschädigtem Triac braucht nur die leicht lösbare rückwärtige Begrenzungswand abgenommen und das Kühlblech von der Metallplatte gelöst und die Steckverbindung zwischen dem Triac und dem Anschluß getrennt zu werden, um Platz für einen neuen Leistungsschalter zu machen. Demgegenüber mußte bisher entweder bei beschädigtem Triac die ganze Reglerschaltung ausgewechselt oder bei Verwendung von Bimetallreglern das Bügeleisen in umständlicher Weise geöffnet werden.

Bei Bügeleisen, bei denen die Leistungsdurchgänge des Triac's von einem IC nach Art einer Impulspaketsteuerung geschaltet werden, ergeben sich besondere Vorteile durch die im Anspruch 13 gekennzeichneten Maßnahmen, die im einzelnen nach Maßgabe der Ansprüche 14 - 17 ausgebildet sind.

Hierdurch ergibt sich ein sehr brauchbarer Temperaturregler mit Anzeigevorrichtung, der vor allem eine gute Regelcharakteristik aufweist. Gegenüber Bimetalltemperaturreglern arbeitet er mit einer außerordentlich geringen Toleranz von nur ± 2°. Schon deshalb läßt sich eine rasche und genaue Übereinstimmung zwischen der vorgewählten Solltemperatur und der Sohlentemperatur herbeiführen.

Der erfindungsgemäße Temperaturregler unterliegt keinem Verschleiß und keinen Alterungserscheinungen. Darüberhinaus zeichnet ihn eine gute Reproduzierbarkeit aus, so daß die Streuungen innerhalb der einzelnen Regler einer Serie geringfügig sind. Von besonderem Vorteil ist jedoch, daß sich mit dem Temperaturregler nach der Erfindung ein gegenüber Temperaturreglern mit Bimetall beträchtlicher Wärmeverlust vermeiden läßt. Dies ergibt sich einmal durch die geringe Streuung von nur ± 2°. Zum anderen ergibt sich diese Einsparung aber auch dadurch, daß die Übereinstimmung zwischen der neueingestellten Solltemperatur und der sich daraus ergebenden angepaßten Sohlentemperatur rasch erfolgt und darüberhinaus noch angezeigt wird. Es entsteht daher nur eine geringe Zeitspanne, in welcher das Bügeleisen nicht benutzt werden kann.

Demgegenüber mußte bei bisherigen temperaturgeregelten Bügeleisen relativ lange auf die neue Sohlentemperatur gewartet werden, die zudem auch nicht angezeigt wurde.

Der neue Temperaturregler mit Anzeigevorrichtung läßt sich gleichgut für Trocken- und Dampfbügeleisen einsetzen.

Ohne Schwierigkeiten wird ein Fachmann den erfindungsgemäßen Temperaturregler auch für andere Wärmegeräte verwenden können.

Von Vorteil ist, wenn als Temperaturfühler ein NTC - Widerstand, ein PTC-Widerstand oder aber ein Thermoelement eingesetzt wird. Wird als Temperaturfühler ein NTC- bzw. ein PTC-Widerstand eingesetzt, ist dieser mit einem Abgleichwiderstand parallelgeschaltet. Dieser verhindert, bei Zerstörung des Temperaturfühlers, eine Beschädigung des Bügeleisens und sorgt darüberhinaus für eine im wesentlichen geradlinige Regelkennlinie.

Als Temperaturvorwähler können Schaltungselemente gemäß

der Ansprüche 20 - 23 zum Einsatz kommen. Stufenschalter bzw. Potentiometer mit Stufenrastung verhindern, daß der Temperaturwähler unbeabsichtigt verstellt werden kann.

In einem ersten Ausführungsbeispiel der Erfindung besteht die Anzeigevorrichtung aus drei in Reihe geschalteten Leuchtdioden mit je einem Vorwiderstand und den beiden Komparatoren, deren Ausgänge die mittlere der drei Leuchtdioden einschließen. Von Vorteil ist, wenn die Leuchtdioden gemäß Anspruch 26 angeordnet und geschaltet sind.

Weitere Einzelheiten der Erfindung lassen sich den Ansprüchen 27 - 29 entnehmen, wobei im Bedarfsfall als Anzeigevorrichtung auch eine an sich bekannte Analoganzeige mit Voltmeter verwendet werden kann, die über zwei Anschlußklemmen mit dem Temperaturregler verbunden ist.

Ausführungsbeispiele der Erfindung werden nachfolgend anhand der Zeichnung erläutert. Es zeigt

Figur 1    eine schematische Darstellung eines Bügeleisens und
Figur 2    einen elektrischen Schaltplan

Ein elektrisch beheiztes Bügeleisen 1 weist eine Sohle 48 mit Heizwicklung, eine Griffstütze 42, eine mit dieser verbundene Abstellfläche 43 und einen elektronischen Temperaturregler 9 auf, zu dem ein Leistungsschalter 2 für die Heizwicklung gehört. Der Leistungsschalter ist als Triac mit Kühlblech 45 ausgebildet.

Das elektrisch beheizte Bügeleisen sowie seine Einzelteile sind in der Figur nur schematisch dargestellt. Die Figur zeigt, daß der Triac 2 von den Schaltungs-

elementen des Temperaturregler's 9 getrennt ist. Er sitzt innerhalb eines dichten Hohlraumes 41, der auf der von der Bügeleisenspitze 480 abgewandten Seite angeordnet ist. Der dichte Hohlraum 41 schließt nach hinten mit einer -leicht lösbaren- rückwärtigen Begrenzungswand ab, die zugleich als Abstellfläche 43 ausgebildet ist. Die dem Hohlraum 41 zugewandte Seite dieser Abstellfläche 43 steht mit einer Metallplatte 44 in Verbindung, auf der das wesentlich kleinere Kühlblech 45 des Triac's 2 befestigt ist.

Hierdurch ist es möglich, daß sich die vom Triac 2 entwickelte Wärme dem Kühlblech 45 mitteilt, von dem sie auf die wesentlich größere Metallplatte 44 übergeht. Dadurch sinkt die Temperatur der Wärme ab, so daß die Metallplatte 44 eine niedrigere Temperatur als das Kühlblech 45 aufweist.

Die Abstellfläche 43, die aus Kunststoff besteht, bildet zudem einen Wärmeisolator zwischen der Metallplatte 44 und derjenigen Fläche, auf der die Abstellfläche 43 abgestellt wird.

Durch die vorstehend geschilderten Maßnahmen wird erreicht, daß die vom Triac 2 abgegebene Wärme weder die wärmeempfindlichen Schaltungselemente des elektronischen Temperaturreglers 9 stört, noch zu Verbrennungen oder Beschädigungen derjenigen Fläche führen kann, auf der die Abstellfläche 43 abgestellt wird. Auch die Bedienungsperson des Bügeleisens kann keinen Schaden durch zu hohe Temperaturen erleiden.

Erfindungsgemäß ist die dem Hohlraum 41 abgewandte Seite der Abstellfläche 43 mit einer wesentlich größeren Oberfläche ausgerüstet, als die dem Hohlraum zugewandte Seite. Diese Oberflächenvergrößerung kann erfindungsgemäß durch eine Strukturierung bzw. Schraffierung der Fläche hervorgerufen werden. Von Vorteil sind auch Kühlrippen, die auf der dem Hohlraum abgewandten Seite der Abstellfläche 43 eingebracht sein können. Diese Kühlrippen haben nicht nur eine Vergrößerung der wärmeabgebenden Oberfläche der Abstellfläche 43 zur Folge, sondern durch sie wird auch eine gewisse wärmeabführende Schornsteinwirkung hervorgerufen.

Der Hohlraum 41 auf der der Bügeleisenspitze 480 abgewandten Seite des elektrisch beheizten Bügeleisens ist wasserdicht verschlossen. Er ist im Inneren einer zwischen der Griffstütze 42 und der Abstellfläche 43 angeordneten an sich bekannten Kabelaufwickelvorrichtung 46 angeordnet. Der bisher ungenutzt gebliebene Hohlraum 41 innerhalb der Kabelaufwickelvorrichtung 46 führt nun durch die Aufnahme des Triac's 2 dazu, der Kabelaufwickelvorrichtung 46 eine weitere Funktion zu geben.

Auf an sich bekannte, in der Figur jedoch nicht näher dargestellten Weise, ist die Abstellfläche 43 leicht lösbar mit der Kabelaufwickelvorrichtung 46 verbunden. Diese leicht lösbare Befestigung führt zu einer leichten Auswechselbarkeit des Triac's 2. Um diese leichte Auswechselbarkeit noch zu erhöhen, ist das Kühlblech 45 einfach mit einer Schraube an der Metallplatte 44 befestigt. Der Triac 2 ist über eine Steckverbindung 61 leicht lösbar mit dem Temperaturregler 9 verbunden.

Die elektronischen Schaltungselemente des elektronischen Temperaturreglers 9 und einer Anzeigevorrichtung 31 mit Leuchtdioden 27, 28, 29 sind feuchtigkeitsdicht im oberen Bereich des Griffes 47 angeordnet. Der Temperaturfühler 20 für den elektronischen Temperaturregler sitzt in der Sohle 48 des Bügeleisens.

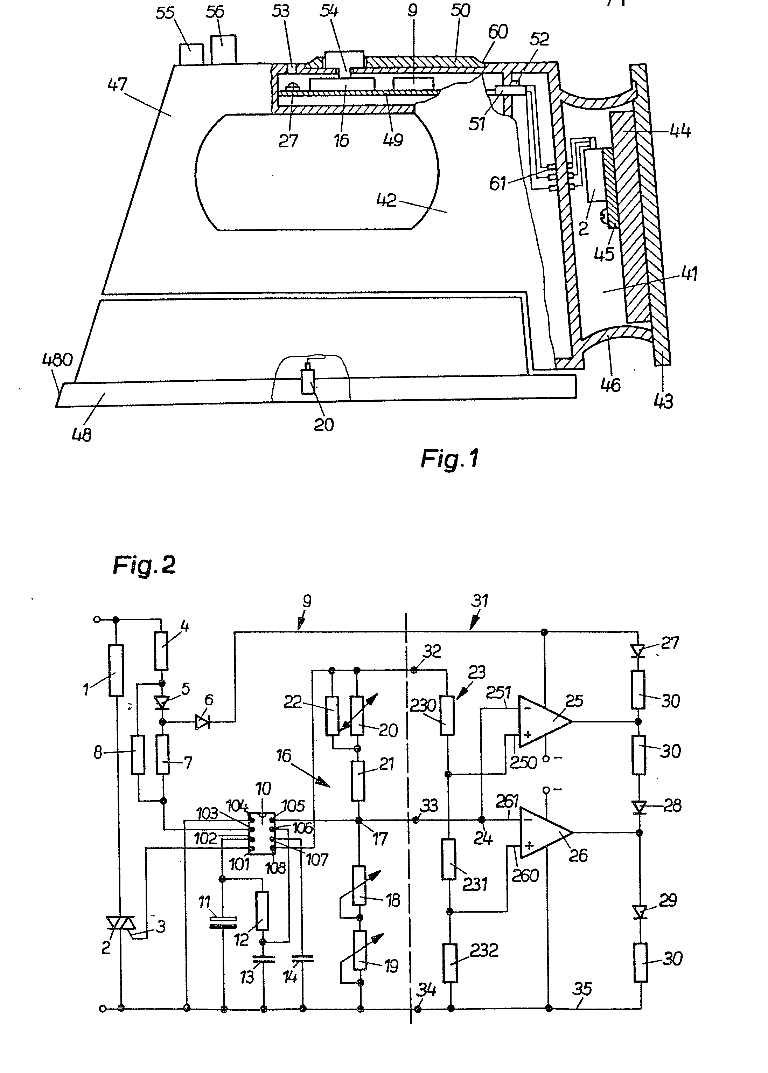

Die Figur 1 läßt erkennen, daß eine Platine 49 vorgesehen ist, welche die elektronischen Schaltungselemente trägt. Anstelle der Platine 49 mit separaten elektronischen Schaltungselementen können auch andere integrierte elektronische Schaltungselemente zum Einsatz kommen.

Wichtig ist, daß die Platine 49 oder ein entsprechendes Element im Inneren des durch einen Deckel 50 dicht verschließbaren oberen Bereiches des Griffes 47 angeordnet ist. Zur Abdichtung des Aufnahmeraumes für die Platine 49 sind die Randbereiche des Deckels 50 und die Randbereiche des oberen Bereiches des Griffes miteinander entsprechenden Hinterschneidungen 60 versehen, die eine labyrinthartige Abdichtung gewährleisten. Die Befestigung des Deckels 50 im oberen Bereich des Griffes 47 kann durch eine an sich bekannte Schnappverbindung oder ähnliche bekannte Verbindungen vorgenommen werden.

Im vorderen Bereich der Platine 49 ist ein Potentiometer bzw. ein Stufenschalter 16 zur an sich bekannten Temperaturvorgabe vorgesehen. Vor diesem Potentiometer bzw. Stufenschalter 16 sind Leuchtdioden 27, 28, 29 angeordnet, die durch Sichtfenster 53 von der bügelnden Person erkennbar sind.

Im hinteren Bereich der Platine 49 ist ein Vielfachstecker 51 zum Anschluß des Triac's 2 erkennbar, der mit wenigstens einer im Inneren des Griffes angeformten Nase 52 in Verbindung steht. Hierdurch erreicht man, daß die Platine zusammen mit dem Vielfachstecker immer richtig in den oberen Bereich des Griffes eingelegt wird. Die Kombination des Vielfachsteckers 51 mit Ausnehmung und der Nase 52 kann auf beliebige Weise erfolgen.

Der Stufenschalter 16 bzw. das Potentiometer 16 ist über eine Achse 54 mit einem Betätigungsorgan 59 verbunden. Das Potentiometer 16 zur Temperaturvorgabe kann als Rastpotentiometer ausgebildet sein, um ein unbeabsichtigtes Verstellen der vorgegebenen Temperatur zu vermeiden.

Im dargestellten Ausführungsbeispiel verläuft die Achse 54 des Potentiometers bzw. Stufenschalters 16 in Gebrauchslage vertikal. In einem anderen, nicht dargestellten Ausführungsbeispiel ist die Achse 54 des Potentiometers bzw. des Stufenschalters 16 in Gebrauchslage des Bügeleisens horizontal angeordnet. In beiden Ausführungsbeispielen ist es leicht möglich, das Betätigungsorgan 59 mit dem Daumen oder einem anderen Finger der bügelnden Hand zu betätigen.

Der leichten Montage- bzw. Demontage wegen ist der Triac 2 über einen Steckkontakt 61 mit den zum Vielfachstecker 51 führenden Leitungen verbunden.

Im vorderen Bereich des Griffes 47 sind an sich bekannte Betätigungselemente 55 bzw. 56 für das Dampfbügeleisen erkennbar.

Die Figur 2 zeigt ein erstes Ausführungsbeispiel der Erfindung, in welchem der Temperaturregler mit 9 und die Anzeigeeinrichtung mit 31 bezeichnet ist. Die dargestellte Anzeigeeinrichtung 31 ist eine Digitalanzeige mit drei Leuchtdioden 27, 28, 29. In diesem Fall ist die Anzeigeeinrichtung 31 in einer weiter unten erläuterten Weise an die Sperrdiode 6 zur Stromversorgung angeschlossen und steht mit dem Temperaturregler über die Klemmen 32, 33, 34 in Schaltverbindung.

In einem zweiten, nicht weiter dargestellten Ausführungsbeispiel kann anstelle der dargestellten Anzeigevorrichtung 31 eine Anzeigevorrichtung 310 mit einem Voltmeter als Analoganzeigevorrichtung verwendet werden. In diesem Falle ist die Analog-Anzeigevorrichtung 310 nur über zwei Klemmen mit dem Temperaturregler 9 verbunden. Die Verbindung wird hergestellt über die Anschlußklemme 33 und entweder über Anschlußklemme 32 oder aber die Anschlußklemme 34.

Im einzelnen ist die Heizwicklung 1 des Bügeleisens über ein Triac 2 mit Steuereingang 3 an die Netzspannung angeschlossen. Der Triac 2 wird durch ein IC 10 beispielsweise nach der Art einer Impulspaketsteuerung geschaltet. Der Steuereingang 105 des IC's liegt an einer Mittelanzapfung 17 eines Reglerspannungsteilers 16 an. An der gleichen Mittelanzapfung 17 liegt über die Anschlußklemme 33 auch der Steuereingang 24 der Anzeigevorrichtung 31 bzw. 310 an.

Der Reglerspannungsteiler 16 ist seinerseits an eine Kontaktspannungsquelle 108 angeschlossen.

Der Figur läßt sich entnehmen, daß die Anzeigevorrichtung 31 optische- und / oder akustische Anzeigeelemente 27, 28, 29, im vorliegenden Fall Leuchtdioden L E D, aufweist, die von als Komparatoren geschalteten Operationsverstärkern 25, 26 beeinflußt werden. Die Steuerspannungseingänge 251, 261 dieser Komparatoren 25, 26 liegen am Steuereingang 24 der Anzeigevorrichtung 31 an. Hingegen liegen ihre Konstantspannungseingänge 250, 260 an einem Anzeigespannungsteiler 23 an, der ebenfalls an eine Konstantspannungsquelle 108 angeschlossen ist. Der Figur läßt sich entnehmen, daß sowohl der Reglerspannungsteiler 16 als auch der Anzeigespannungsteiler 23 in Parallelschaltung an derselben Konstantspannungsquelle 108 anliegen. Von Vorteil ist, daß die Konstantspannungsquelle für beide Spannungsteiler 16, 23 die entsprechende Ausgangsklemme 108 des IC 10 ist. Praktisch sind beide Spannungsteiler 16, 23 als Brücke geschaltet. Die nicht in der Figur dargestellten Brückenglieder sind Bestandteile des IC 10.

Der Reglerspannungsteiler 16 besteht bezogen auf die Mittelanzapfung 17 aus zwei Kreisen. Der erste Kreis enthält einen Temperaturvorwähler 18 mit Trimm-Widerstand 19, und der zweite Kreis einen Temperaturfühler 20 für die Heizwicklung 1 des Bügeleisens.

Als Temperaturfühler 20 kann ein NTC- bzw. PTC-Widerstand eingesetzt werden, dem ein Abgleichwider-stand 22 parallelgeschaltet ist. Dieser Abgleichwiderstand 22 sorgt im wesentlichen für ein lineares Verhalten des Temperaturfühlers 20. Der Vorwiderstand 21 dient zum Abgleich der beiden Kreise des Reglerspannungsteilers 16.

Als Temperaturvorwähler 18 kann ein an sich bekanntes Potentiometer mit Stufenrastung verwendet werden.Hierdurch läßt sich gut ein unbeabsichtigtes Verstellen der Soll-Wert-Temperatur vermeiden und, wenn beispielsweise elf Stufenrastungen vorgesehen sind, eine recht feinfühlige Verstellung der Solltemperatur erreichen.

Anstelle des Potentiometers 18 mit Stufenrastung kann ohne am Kern der Erfindung etwas zu ändern, auch ein bekannter Stufenschalter mit Stufenwider-ständen vorgesehen werden. Schließlich ist auch ein Temperaturvorwähler mit einem stufenlos verstellbaren Potentiometer möglich. Der Trimmer 19 dient zum Abgleich der beiden Kreise des Reglerspannungsteilers 16.

Im einzelnen ist die Anordnung so getroffen, daß der im Potentiometer 18 bzw. im Stufenschalter eingestellte Widerstand jeweils dem Widerstand des Temperaturfühlers 20 im eingestellten Temperaturbereich entspricht. Aus der Figur ist ersichtlich, daß durch Verstellung des Temperaturvorwählers 18 der Spannungsteiler aus seinem Gleichgewichtszustand gelangt. Es tritt an der Mittelanzapfung 17 ein entsprechendes Potential auf. Dieses Potential wirkt über den Steuereingang 105 auf den IC 10 ein, der seinerseits über den Steuereingang 3 den Triac 2 beeinflußt. Hierdurch wird die Heizwicklung 1 beeinflußt. Entweder steigt die Sohlentemperatur an oder sie fällt ab. Diese Temperaturveränderung teilt sich dem Temperaturfühler 20 mit, dessen Widerstand sich verändert und zwar so lange bis der Spannungsteiler 16 abgeglichen ist. Dann stimmt die Solltemperatur mit der Sohlemtemperatur des Bügeleisens überein.

Die Potentialänderungen an der Mittelanzapfung 17 teilen sich auch der Anzeigevorrichtung 31 bzw. 310 mit.

In der Figur besteht die Anzeigevorrichtung 31 aus drei in Reihe geschalteten Leuchtdioden 27, 28, 29 mit je einem Vorwiderstand 30 und den beiden Komparatoren 25, 26 deren Ausgänge die mittlere Leuchtdiode 28 einschließen. Die Komparatoren 25, 26 sind Operationsverstärker. Diese werden wie die Leuchtdioden 27, 28 bzw. 29 über eine Sperrdiode 6 aus dem Netz gespeist. Im einzelnen erfolgt die Spannungsversorgung des Temperaturreglers 9 und der Anzeigevorrichtung 31 über einen Vorwiderstand 4 an den die Anzeigevorrichtung 31 über eine Gleichrichterdiode 5 und die Sperrdiode 6 angeschlossen ist. Der Temperaturregler 9 liegt über einen zweiten Vorwiderstand an der Gleichrichterdiode 5 an. Die Gleichrichterdiode 5 und ein zweiter Vorwiderstand werden durch einen Parallelwiderstand 8 überbrückt. Dieser Parallelwiderstand 8 sorgt dafür, daß der Temperaturregler 9 auch mit der negativen Halbwelle der Netzspannung versorgt wird. Die Spannungsversorgung liegt am Eingang 103 des IC's an.

Der IC 10 ist über einen Glättungskondensator 11, ein RC-Glied 12, 13 zur Zeitbestimmung der Sägezahnspannung und einen Kondensator 14 zur Bestimmung der Zündimpulsdauer mit der Masse 35 der Schaltungsanordnung verbunden.

Die Leuchtdioden 27, 28, 29 der Anzeigevorrichtung 31 sind unterschiedlich gefärbt. Eine gelbe Diode leuchtet, wenn die Sohlentemperatur des Bügeleisens unter der vorgewählten Solltemperatur liegt. Eine rote Leuchtdiode 29 leuchtet, wenn die Sohlentemperatur über der vorgewählten Solltemperatur liegt. Die mittlere grüne Leuchtdiode 28 leuchtet, wenn die Sohlentemperatur und die vorgewählte Solltemperatur übereinstimmen.

Der Anzeigespannungsteiler 23 besteht aus den Widerständen 230, 231 und 232. Da der Spannungsteiler 23 selbst an der Konstantspannungsquelle 108 anliegt, ist einleuchtend, daß die Konstantspannungseingänge 250 und 260 der Komparatoren 25 und 26 stets gleiche Spannung erhalten. Nur die am Steuereingang 24 anliegende Spannung ändert sich mit den Potentialschwankungen an der Mittelanzapfung 17.

Die Funktionsweise der Anzeigevorrichtung läßt sich im einzelnen wie folgt erläutern:

Bezeichnet man den Spannungsabfall am Widerstand 230 mit $U_1$, den Spannungsabfall am Widerstand 231 mit $U_2$ und den Spannungsabfall am Widerstand 232 mit $U_3$, so entspricht $U_1 + U_2 + U_3$ der von der Konstantspannungsquelle 108 abgegebenen konstanten Spannung.

Bezeichnet man nun die an der Mittelanzapfung 17 und am Steuereingang 24 anliegende variable Spannung mit $U_4$, so ergeben sich folgende Gleichungen:

$$U_3 < U_4 < ( U_2 + U_3 ) - \text{D 28 leuchtet}$$

$U_4 < U_3 \longrightarrow$ D 29 leuchtet

$U_4 > ( U_2 + U_3 )$ - D 27 leuchtet.

Die Analoganzeigevorrichtung 310, die nicht dargestellt ist, ist entweder an die Anschlußklemmen 33 und 32 bzw. 33 und 34 angeschlossen. Das Voltmeter dieser Analoganzeigevorrichtung zeigt dann die Potentialschwankungen bei der Mittelanzapfung 17 an.

0024613

- 18 -

Patentansprüche

1. Elektrisch beheiztes Bügeleisen bestehend aus einer Sohle (48) mit Heizwicklung (1), einem Griff (47), einer Griffstütze (42) und einem elektronischen Temperaturregler (9), in dem als Leistungsschalter für die Heizwicklung (1) ein Triac (2) mit Kühlblech (45) vorgesehen ist, dadurch gekennzeichnet, daß zur Aufnahme des räumlich von den Schaltungselementen des Temperaturreglers (9) getrennten Triac's (2) auf der der Bügeleisenspitze (480) abgewandten Seite ein dichter Hohlraum (41) angeordnet ist, dessen leicht lösbare, rückwärtige Begrenzungswand zugleich die Abstellfläche (43) bildet, mit deren, dem Hohlraum (41) zugewandten Seite eine Metallplatte (44) in Verbindung steht, auf der das wesentlich kleinere Kühlblech (45) des Triac's befestigt ist.

2. Elektrisch beheiztes Bügeleisen nach Anspruch 1 dadurch gekennzeichnet, daß die dem Hohlraum (41) abgewandte Seite der Abstellfläche (43) eine wesentlich größere Oberfläche als die dem Hohlraum zugewandte Seite aufweist.

3. Elektrisch beheiztes Bügeleisen nach den Ansprüchen 1 und 2 dadurch gekennzeichnet, daß der Hohlraum (41) im Inneren einer zwischen der Griffstütze (42) und der Abstellfläche vorgesehenen, an sich bekannten Kabelaufwickelvorrichtung (46) angeordnet ist.

4. Elektrisch beheiztes Bügeleisen nach den Ansprüchen 1 - 3, bei dem der elektronische Temperaturregler mit einer Anzeigevorrichtung kombiniert ist, dadurch gekennzeichnet, daß die elektronischen Schaltungselemente des elektronischen Temperaturreglers (9) und der Anzeigevorrichtung (31) - außer dem Triac (2) - feuchtigkeitsdicht im oberen Bereich des Griffes (47), und der Temperaturfühler (20) für den elektronischen Temperaturregler (9) an der Sohle (48) des Bügeleisens vorgesehen sind.

5. Elektrisch beheiztes Bügeleisen nach Anspruch 4 dadurch gekennzeichnet, daß eine die elektronischen Schaltungselemente tragende Platine (49) im Inneren des durch einen Deckel (50) verschließbaren oberen Bereiches des Griffes (47) angeordnet ist, und daß die Randbereiche des Deckels (50) und des oberen Bereiches des Griffes (47) einander entsprechende Hinterschneidungen (60) für eine labyrinthartige Abdichtung aufweisen.

6. Elektrisch beheiztes Bügeleisen nach den Ansprüchen 4 und 5 dadurch gekennzeichnet, daß die elektronischen Schaltungselemente ein im vorderen Bereich der Platine (49) angeordnetes Potentiometer bzw. einen Stufenschalter (16) zur Temperaturvorgabe, sowie drei Leuchtdioden (27) einschließen, die auf der Platine (49) vor dem Potentiometer bzw. dem Stufenschalter (16) angeordnet sind.

7. Elektrisch beheiztes Bügeleisen nach den Ansprüchen 4 - 6 dadurch gekennzeichnet, daß im hinteren Bereich der Platine (49) ein Vielfachstecker (51) mit einer Zwangsführung vorgesehen ist, der mit wenigstens einer im Inneren des Griffes (47) angeformten Nase (52) in Wirkverbindung steht.

8. Elektrisch beheiztes Bügeleisen, nach den Ansprüchen 4 - 7 dadurch gekennzeichnet, daß das Potentiometer (16) zur Temperaturvorgabe ein Rastpotentiometer ist.

9. Elektrisch beheiztes Bügeleisen nach den Ansprüchen 4 - 8 dadurch gekennzeichnet, daß im Griff (47) Sichtfenster (53) für die auf der Platine (49) angeordneten Leuchtdioden (27) vorgesehen sind.

10. Elektrisch beheiztes Bügeleisen nach den Ansprüchen 4 - 9 dadurch gekennzeichnet, daß die Achse (54) des Potentiometers bzw. Stufenschalters (16) in Gebrauchslage des Bügeleisens vertikal angeordnet ist.

11. Elektrisch beheiztes Bügeleisen nach den Ansprüchen 4 - 10 dadurch gekennzeichnet, daß die Achse (54) des Potentiometers bzw. des Stufenschalters (16) in Gebrauchslage des Bügeleisens horizontal angeordnet ist.

12. Elektrisch beheiztes Bügeleisen nach den Ansprüchen 4 - 11 dadurch gekennzeichnet, daß der Triac (2) über Steckverbindung (61) leicht lösbar mit dem Temperaturregler (9) verbunden ist.

13. Elektrisch beheiztes Bügeleisen nach den Ansprüchen 1 - 12 bei dem die Leistungsdurchgänge des Triac's von einem IC nach Art einer Impulspaketsteuerung geschaltet werden dadurch gekennzeichnet, daß die Steuereingänge (105, 24) des den Triac (2) steuernden IC's (10) und der Anzeigevorrichtung (31,310) gemeinsam an der Mittelanzapfung (17) eines Reglerspannungsteilers (16) angeschlossen sind, der an einer Konstantspannungsquelle (108) anliegt.

14. Elektrisch beheiztes Bügeleisen nach Anspruch 13 dadurch gekennzeichnet, daß die Anzeigevorrichtung (31) mit optischen und / oder akustischen Anzeigeelementen (27,28,29 ) verbundene Komparatoren ( 25,26) auf - weist, deren Steuerungseingänge (251,261) am Steuereingang (24) der Anzeigevorrichtung (31) und deren
Konstantspannungseingänge (250, 260) an einem Anzeigespannungsteiler (23) anliegen, der ebenfalls
an eine Konstantspannungsquelle (108) angeschlossen
ist.

15. Elektrisch beheiztes Bügeleisen nach den Ansprüchen
13 und 14 dadurch gekennzeichnet, daß der Reglerspannungsteiler (16) und der Anzeigespannungsteiler
(23) in Parallelschaltung an derselben Konstantspannungsquelle (108) anliegen.

16. Elektrisch beheiztes Bügeleisen nach den Ansprüchen
13 - 15 dadurch gekennzeichnet, daß die Konstantspannungsquelle für beide Spannungsteiler (16,23)
eine entsprechende Ausgangsklemme (108) des IC (10)
ist.

17. Elektrisch beheiztes Bügeleisen nach den Ansprüchen
13 - 16 dadurch gekennzeichnet, daß der Reglerspannungsteiler (16) aus zwei Kreisen (18,19; 20,21,22)
besteht, von denen der erste einen Temperaturvorwähler (18) für das Bügeleisen und der zweite einen Temperaturfühler (20) für die Heizwicklung (1) einschließt.

18. Elektrisch beheiztes Bügeleisen nach den Ansprüchen
13 - 17 dadurch gekennzeichnet, daß der Temperaturfühler (20) ein NTC-Widerstand, ein PTC-Widerstand
oder ein Thermoelement ist.

19. Elektrisch beheiztes Bügeleisen nach Anspruch 18 dadurch gekennzeichnet, daß der als Temperaturfühler
verwendete NTC bzw. PTC-Widerstand (20) mit einem Abgleichwiderstand (22) parallel geschaltet ist.

20. Elektrisch beheiztes Bügeleisen nach den Ansprüchen
13 - 19 dadurch gekennzeichnet, daß der Temperaturvorwähler (18) ein an sich bekanntes Potentiometer
mit Stufenrastung ist.

21. Elektrisch beheiztes Bügeleisen nach den Ansprüchen
13 - 19 dadurch gekennzeichnet, daß der Temperaturvorwähler (18) einen an sich bekannten Stufenschalter
mit Stufenwiderständen einschließt.

22. Elektrisch beheiztes Bügeleisen nach den Ansprüchen
13 - 19 dadurch gekennzeichnet, daß der Temperaturvorwähler ein stufenlos verstellbares Potentiometer
ist.

23. Elektrisch beheiztes Bügeleisen nach den Ansprüchen
13 - 22 dadurch gekennzeichnet, daß der im Potentiometer (18) bzw. im Stufenschalter (18) eingestellte
Widerstand jeweils dem Widerstand des Temperaturfühlers (20) im eingestellten Temperaturbereich entspricht.

24. Elektrisch beheiztes Bügeleisen nach den Ansprüchen
1 - 23 dadurch gekennzeichnet, daß die Anzeigevorrichtung (31) aus drei in Reihe geschalteten Leuchtdioden (27,28,29) mit je einem Vorwiderstand (30)
und den beiden Komparatoren (25,26) besteht, deren
Ausgänge die mittlere (28) der drei Leuchtdioden einschließen.

25. Elektrisch beheiztes Bügeleisen nach Anspruch 24 dadurch gekennzeichnet, daß die Komparatoren (25,26)
Operationsverstärker sind.

26. Elektrisch beheiztes Bügeleisen nach den Ansprüchen
13 - 23 dadurch gekennzeichnet, daß die Leuchtdioden
(27,28,29) der Anzeigevorrichtung (31) unterschiedlich
gefärbt sind und die gelbe (27) leuchtet, wenn die
Sohlentemperatur unter der vorgewählten Solltemperatur
liegt, daß die rote (29) leuchtet, wenn die Sohlentemperatur über der vorgewählten Solltemperatur liegt und daß die grüne (28) leuchtet, wenn die Sohlentemperatur und die vorgewählte Solltemperatur übereinstimmen.

27. Elektrisch beheiztes Bügeleisen nach den Ansprüchen 13 - 26 dadurch gekennzeichnet, daß die Spannungsversorgung des Temperaturreglers (9) und der Anzeigevorrichtung (31) über einen Vorwiderstand (4) erfolgt, an den die Anzeigevorrichtung (31) über eine Gleichrichterdiode (5) und eine Sperrdiode (6) und der Temperaturregler (9) über die Gleichrichterdiode (5) und einen zweiten Vorwiderstand (7) sowie über einen die Gleichrichterdiode (5) und den zweiten Vorwiderstand (7) überbrückenden Parallelwiderstand (8) angeschlossen ist.

28. Elektrisch beheiztes Bügeleisen nach den Ansprüchen 13 - 27, dadurch gekennzeichnet, daß der Temperaturregler (9) über Anschlußklemmen (32,33,34) mit den Steuergliedern (230,231,232) und (25,26) der Anzeigevorrichtung (31) verbunden ist.

29. Elektrisch beheiztes Bügeleisen nach Anspruch 13 dadurch gekennzeichnet, daß als Anzeigevorrichtung (310) eine an sich bekannte Analoganzeige mit Voltmeter verwendet wird, die über zwei Anschlußklemmen (33) und (32 bzw. 34) mit dem Temperaturregler (9) verbunden ist.

- 25 -

Elektrisch beheiztes Bügeleisen

Liste der verwendeten Bezeichnungen

  1 Heizwicklung
  2 Triac
  3 Steuereingang
  4 Vorwiderstand
  5 Gleichrichterdiode
  6 Sperrdiode
  7 Vorwiderstand
  8 Parallelwiderstand
  9 Temperaturregler
 10 IC
101
102
103 Spannungsversorgung
104
105 Steuereingang
106
107
108 Konstantspannungsquelle
 11 Glättungskondensator
 12 RC Glied zur Zeitbestimmung
 13 der Sägezahnspannung
 14 Kondensator zur Bestimmung der Zündimpulsdauer
 15
 16 Regler-Spannungsteiler
 17 Mittelanzapfung

18 Temperaturvorwähler

19 Trimmer

20 Temperaturfühler NTC

21 Vorwiderstand

22 Abgleichwiderstand

23 Anzeigespannungsteiler

230 Widerstand

231 Widerstand

232 Widerstand

24 Steuereingang

25 Operationsverstärker

250 Konstantspannungseingang

251 Steuerspannungseingang

26 Operationsverstärker

260 Konstantspannungseingang

261 Steuerspannungseingang

27 LED rot

28 LED grün

29 LED gelb

30 Vorwiderstand

31 Anzeigevorrichtung

310 Anzeigevorrichtung

32 Anschlußklemme

33 Anschlußklemme

34 Anschlußklemme

35 Masse

36

37

38

39

40

41 dichter Hohlraum

42 Griffstütze

43 Griffabstellfläche

44 Metallplatte

45 Kühlblech

46 Kabelaufwickelvorrichtung

47 Griff

48 Sohle
480 Bügeleisenspitze
49 Platine
50 Deckel
51 Vielfachstecker
52 Nase
53 Sichtfenster
54 Achse
55 Betätigungselement
56 Betätigungselement
57
58
59 Betätigungsorgan
60 Hinterschneidung
61 Steckverbindung

Fig.1

Fig.2

0024613

## Europäisches Patentamt

# EUROPÄISCHER RECHERCHENBERICHT

Nummer der Anmeldung

EP 80 10 4722

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| | GB - A - 1 068 419 (MORPHY-RICHARDS) <br> * Seite 2, Zeilen 41-62 * <br> -- | 1,4-6, 8,11 | D 06 F 75/26 <br> G 05 D 23/24 |
| | DE - U - 7 609 526 (ROWENTA) <br> * Anspruch 1 * <br> -- | 3 | |
| D | DE - U - 1 972 915 (VEIT) <br> * Anspruch 1 * <br> -- | 1 | |
| A | DE - A - 2 156 007 (VEB) <br> * Anspruch 1 * <br> -- | | RECHERCHIERTE SACHGEBIETE (Int. Cl.³) <br><br> D 06 F <br> G 05 D |
| A | DE - U - 1 968 629 (WOLFF) <br> * Anspruch 1 * <br> -- | | |
| A | DE - U - 2 107 924 (BRAITHWAITE) <br> * Ansprüche * <br> -- | | |
| A | FR - A - 2 414 577 (DOKOUPIL) <br> * Seite 7, Zeile 36 bis Seite 12, Zeile 20 * <br> -- | | |
| P | DE - U - 7 924 293 (ROWENTA) <br> * Das ganze Dokument * <br> -- ./. | | |

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-11-1980 | D'HULSTER |

EPA form 1503.1   06.78